# EUROPEAN PATENT SPECIFICATION

(11) **EP 3 357 891 B1**
(45) Date of publication and mention of the grant of the patent: **17.02.2021**
(21) Application number: 16851795.1
(22) Date of filing: 29.09.2016
(51) Int. Cl.: B32B 17/10

(54) **INTERLAYER FOR LAMINATED GLASS, AND LAMINATED GLASS**
ZWISCHENSCHICHT FÜR VERBUNDGLAS SOWIE VERBUNDGLAS
COUCHE INTERMÉDIAIRE POUR VERRE FEUILLETÉ ET VERRE FEUILLETÉ

(30) Priority: 30.09.2015 JP 2015195404
(43) Date of publication of application: 08.08.2018
(73) Proprietor: Sekisui Chemical Co., Ltd., Osaka-shi, Osaka 530-8565 (JP)
(72) Inventor: NISHINO, Hiromitsu, Kouka-shi Shiga 528-8585 (JP); HIROTA, Etsurou, Kouka-shi Shiga 528-8585 (JP); KUMAKURA, Koji, Kouka-shi Shiga 528-8585 (JP)
(74) Representative: Ter Meer Steinmeister & Partner
(86) International application number: PCT/JP2016/078906
(87) International publication number: WO 2017/057624

(56) References cited:
- EP-A1- 3 322 747
- JP-A- 2013 006 731
- JP-A- 2013 006 731
- JP-A- 2014 156 390
- JP-A- 2015 116 679
- JP-A- 2015 116 680
- JP-A- 2015 116 682
- US-A- 4 925 725
- US-A- 5 425 977
- US-A1- 2004 191 482

## Description

### TECHNICAL FIELD

The present invention relates to an interlayer film for laminated glass which is used for obtaining laminated glass. Moreover, the present invention relates to laminated glass prepared with the interlayer film for laminated glass.

### BACKGROUND ART

Since laminated glass generally generates only a small amount of scattering glass fragments even when subjected to external impact and broken, laminated glass is excellent in safety. As such, the laminated glass is widely used for automobiles, railway vehicles, aircraft, ships, buildings, and the like. The laminated glass is produced by sandwiching an interlayer film for laminated glass between a pair of glass plates.

Moreover, as the laminated glass used for automobiles, a head-up display (HUD) has been known. In the HUD, on the windshield of an automobile, measured information such as the speed which is traveling data of the automobile and the like can be displayed.

In the HUD, there is a problem that the measured information displayed on the windshield is doubly observed.

In order to suppress double images, a wedge-shaped interlayer film has been used. The following Patent Document 1 discloses a sheet of laminated glass in which a wedge-shaped interlayer film having a prescribed wedge angle is sandwiched between a pair of glass plates. In such a sheet of laminated glass, by the adjustment of the wedge angle of the interlayer film, a display of measured information reflected by one glass plate and a display of measured information reflected by the other glass plate can be focused into one point to make an image in the visual field of a driver. As such, the display of measured information is hard to be observed doubly and the visibility of a driver is not hindered.

Further interlayer films are known from Patent Documents 2-6.

### Related Art Document

### Patent Document

Patent Document 1: JP H4-502525 T
Patent Document 2: EP 3 322 747 A1
Patent Document 3: JP 2013 006731 A
Patent Document 4: US 4 925 725 A
Patent Document 5: US 5 425 977 A
Patent Document 6: US 2004/191482 A1

### SUMMARY OF THE INVENTION

### PROBLEMS TO BE SOLVED BY THE INVENTION

At the time of obtaining a sheet of laminated glass, a process in which an interlayer film is sandwiched between a pair of glass plates and subjected to degassing is performed. In a conventional wedge-shaped interlayer film, poor degassing is liable to occur. As a result, in the resulting sheet of laminated glass, an air bubble is left behind between a glass plate and the interlayer film. When an air bubble is left behind, a poor appearance of laminated glass is liable to occur. Moreover, in the HUD, the display of measured information becomes difficult to be observed.

An object of the present invention is to provide an interlayer film for laminated glass with which an air bubble can be made difficult to be left behind between a lamination glass member and the interlayer film when laminated glass is obtained. Moreover, the present invention is also aimed at providing laminated glass prepared with the above-mentioned interlayer film for laminated glass.

### MEANS FOR SOLVING THE PROBLEMS

According to a broad aspect of the present invention, there is provided an interlayer film for laminated glass (in the present specification, sometimes abbreviated as "an interlayer film") according to claim 1. Amongst other things, the interlayer film for laminated glass is an interlayer film containing a thermoplastic resin and having one end and the other end being at the opposite side of the one end and having a thickness thicker than the one end, each of three values of the ten-point average roughness Rz of the surface at a position apart from the one end by 50 mm toward the other end, the ten-point average roughness Rz of the surface at a center position between the one end and the other end, and the ten-point average roughness Rz of the surface at a position apart from the other end by 50 mm toward the one end being 20 µm or more and a value calculated by subtracting the smallest value among the three values from the largest value among the three values being 3 µm or more and 9 µm or less.

The thermoplastic resin in the interlayer film is a polyvinyl acetal resin.

In a specific aspect of the interlayer film according to the present invention, the thickness at a position apart from the other end by 50 mm toward the one end is 1.2 times or more and 2.5 times or less of the thickness at a position apart from the one end by 50 mm toward the other end.

In a specific aspect of the interlayer film according to the present invention, the interlayer film has a portion with a sectional shape in the thickness direction of a wedge-like shape.

In a specific aspect of the interlayer film according to the present invention, the interlayer film contains a plasticizer.

In a specific aspect of the interlayer film according to the present invention, the surface thereof is embossed.

According to a broad aspect of the present invention, there is provided laminated glass including a first lamination glass member, a second lamination glass member, and the above-described interlayer film for laminated glass, the interlayer film for laminated glass being arranged between the first lamination glass member and the second lamination glass member.

### EFFECT OF THE INVENTION

Since the interlayer film for laminated glass according to the present invention contains a thermoplastic resin and has one end and the other end being at the opposite side of the one end and having a thickness thicker than the one end, each of three values of the ten-point average roughness Rz of the surface at a position apart from the one end by 50 mm toward the other end, the ten-point average roughness Rz of the surface at a center position between the one end and the other end, and the ten-point average roughness Rz of the surface at a position apart from the other end by 50 mm toward the one end is 20 µm or more, and a value calculated by subtracting the smallest value among the three values from the largest value among the three values is 3 µm or more and 9 µm or less, an air bubble can be made difficult to be left behind between a lamination glass member and the interlayer film when laminated glass is obtained.

### BRIEF DESCRIPTION OF DRAWINGS

[Fig. 1] Figs. 1(a) and 1(b) are a sectional view and a plan view schematically showing an interlayer film for laminated glass which is in accordance with a first embodiment of the present invention except for the fact that the positions which are indicated for the measurement of the ten-point average roughness Rz(1) and Rz(3) are not at a distance which is 50 mm apart from the ends, respectively.
[Fig. 2] Figs. 2(a) and 2(b) are a sectional view and a plan view schematically showing an interlayer film for laminated glass which is in accordance with a second embodiment of the present invention except for the fact that the positions which are indicated for the measurement of the ten-point average roughness Rz(1) and Rz(3) are not at a distance which is 50 mm apart from the ends, respectively.
[Fig. 3] Fig. 3 is a sectional view showing the first modified example of a sectional shape in the thickness direction of an interlayer film for laminated glass.
[Fig. 4] Fig. 4 is a sectional view showing the second modified example of a sectional shape in the thickness direction of an interlayer film for laminated glass.
[Fig. 5] Fig. 5 is a sectional view showing the third modified example of a sectional shape in the thickness direction of an interlayer film for laminated glass.
[Fig. 6] Fig. 6 is a sectional view showing the fourth modified example of a sectional shape in the thickness direction of an interlayer film for laminated glass.
[Fig. 7] Fig. 7 is a sectional view showing the fifth modified example of a sectional shape in the thickness direction of an interlayer film for laminated glass.
[Fig. 8] Fig. 8 is a sectional view showing the sixth modified example of a sectional shape in the thickness direction of an interlayer film for laminated glass.
[Fig. 9] Fig. 9 is a sectional view showing the seventh modified example of a sectional shape in the thickness direction of an interlayer film for laminated glass.
[Fig. 10] Fig. 10 is a sectional view showing an example of laminated glass prepared with the interlayer film for laminated glass shown in Fig. 1.

### MODE(S) FOR CARRYING OUT THE INVENTION

Hereinafter, the details of the present invention will be described.

The interlayer film for laminated glass (in the present specification, sometimes abbreviated as "the interlayer film") according to the present invention has a one-layer structure or a two or more-layer structure. The interlayer film according to the present invention may have a one-layer structure and may have a two or more-layer structure. The interlayer film according to the present invention may have a two-layer structure and may have a three or more-layer structure. The interlayer film according to the present invention is provided with a first layer. The interlayer film according to the present invention may be a single-layered interlayer film provided with only the first layer and may be a multi-layered interlayer film provided with the first layer and another layer.

The interlayer film according to the present invention contains a polyvinyl acetal resin. The interlayer film according to the present invention has one end and the other end being at the opposite side of the one end and having a thickness thicker than the one end. The one end and the other end are end parts of both sides facing each other in the interlayer film.

In the interlayer film according to the present invention, each of three values of the ten-point average roughness Rz(1) of the surface at a position apart from the one end by 50 mm toward the other end, the ten-point average roughness Rz(2) of the surface at a center position between the one end and the other end, and the ten-point average roughness Rz (3) of the surface at a position apart from the other end by 50 mm toward the one end is 20 µm or more, and 50 µm or less.

By virtue of the above-described configuration in the present invention, an air bubble can be made difficult to be left behind between a lamination glass member and the interlayer film when laminated glass is obtained. At the time of obtaining a sheet of laminated glass, a process in which an interlayer film is sandwiched between a first lamination glass member and a second lamination glass member and subjected to degassing is performed. Since the interlayer film according to the present invention is provided with the above-mentioned configuration, poor degassing is less liable to occur. As a result, in the resulting sheet of laminated glass, an air bubble is made difficult to be left behind between a glass plate and the interlayer film. Since an air bubble is hardly left behind, a poor appearance of laminated glass is less liable to occur. Moreover, in the HUD, the display of measured information becomes satisfactory.

In general, when an interlayer film has a uniform thickness, an air bubble is hardly left behind between a glass plate and the interlayer film. In contrast, it has been found out that, when the thickness of one end is thinner than the thickness of the other end, or, when a wedge-shaped interlayer film is adopted, poor degassing is liable to occur and an air bubble tends to be easily left behind. For example, it is thought that this is because, when an interlayer film is sandwiched between a first lamination glass member and a second lamination glass member or a surface treatment is performed with the use of an embossing roll and the like at the time of obtaining an interlayer film, contact properties between the interlayer film and the lamination glass member or contact properties between the interlayer film and the embossing roll vary with places.

The present inventors have found out that, even when the thickness of one end is thinner than the thickness of the other end, or, even when a wedge-shaped interlayer film is adopted, an air bubble can be made difficult to be left behind between a lamination glass member and the interlayer film by virtue of the above-mentioned configuration ((respective lower limits of the three values) of the present invention.

Furthermore, in the present invention, from the viewpoint of further making an air bubble difficult to be left behind, a value of Largest value among three values of the ten-point average roughness Rz(1), the ten-point average roughness Rz(2), and the ten-point average roughness Rz(3) - Smallest value among those is 3 µm or more and 9 µm or less. That is, in the present invention, from the viewpoint of further making an air bubble difficult to be left behind, a value calculated by subtracting the smallest value among the three values from the largest value among the three values is 3 µm or more and 9 µm or less.

The present inventors have found out that, even when the thickness of one end is thicker than the thickness of the other end, or, even when a wedge-shaped interlayer film is adopted, an air bubble can be further made difficult to be left behind between a lamination glass member and the interlayer film by virtue of the above-mentioned configuration (the range within which a value of Largest value among the three values - Smallest value among those lies) of the present invention. Furthermore, the present inventors have found out that, when two interlayer film portions are brought into contact with each other or an interlayer film portion is brought into contact with another member, blocking can be prevented by virtue of the above-mentioned configuration (a value of Largest value among the three values - Smallest value among those) of the present invention.

The interlayer film needs only to satisfy the foregoing configuration on a first surface (one surface) thereof. Effects of the present invention are exerted at the first surface side. It is preferred that the interlayer film satisfy the above-mentioned configuration on both of a first surface and a second surface at the opposite side of the first surface. In this case, effects of the present invention are exerted at the first surface side and at the second surface side.

The ten-point average roughness Rz is measured in accordance with JIS B0601: 1994. The ten-point average roughness Rz is a value obtained by measuring a distance between two parallel lines of a straight line passing through the third from the highest point and a straight line passing through the third from the deepest point within a length to be sampled from the profile curve.

From the viewpoint of further making an air bubble difficult to be left behind, each of the ten-point average roughness Rz(1), the ten-point average roughness Rz(2), and the ten-point average roughness Rz(3) is preferably 25 µm or more, and 50 µm or less, preferably 45 µm or less, especially preferably 40 µm or less, and most preferably 35 µm or less.

From the viewpoints of still further making an air bubble difficult to be left behind and further preventing the blocking, a value of Largest value among three values of the ten-point average roughness Rz(1), the ten-point average roughness Rz(2), and the ten-point average roughness Rz(3) - Smallest value among those is preferably 4 µm or more and preferably 8 µm or less.

From the viewpoint of further preventing the blocking, the largest value among three values of the ten-point average roughness Rz(1), the ten-point average roughness Rz(2), and the ten-point average roughness Rz(3) is the ten-point average roughness Rz(3).

It is preferred that the interlayer film have an MD direction and a TD direction. For example, the interlayer film is obtained by melt extrusion molding. The MD direction is a flow direction of an interlayer film at the time of producing the interlayer film. The TD direction is a direction orthogonal to the flow direction of an interlayer film at the time of producing the interlayer film and a direction orthogonal to the thickness direction of the interlayer film. From the viewpoint of further making an air bubble difficult to be left behind, it is preferred that the one end and the other end be both side end parts in the TD direction. In this case, the ten-point average roughness Rz(1), the ten-point average roughness Rz(2), and the ten-point average roughness Rz(3) are evaluated at measurement points in the TD direction.

Since effects of the present invention are further effectively attained, it is preferred that the interlayer film have a portion with a sectional shape in the thickness direction of a wedge-like shape.

It is preferred that at least one surface among surfaces of both sides of the interlayer film have a recess/protrusion shape. It is more preferred that surfaces of both sides of the interlayer film have a recess/protrusion shape. The method for forming the recess/protrusion shape is not particularly limited, and examples thereof include a lip emboss method, an embossing roll method, a calender roll method, a profile extrusion method, and the like. Since it is possible to quantitatively form many embosses with a recess/protrusion shape constituting a constant uneven pattern, the embossing roll method is preferred.

Since effects of the present invention are further effectively attained, it is preferred that a surface of the interlayer film be embossed by an embossing roll method.

When an embossing roll method is applied thereto, by tilting at least one among two embossing rolls or the like, an interval between the two embossing rolls at one end side of the interlayer film can be made narrow and an interval between the two embossing rolls at the other end side of the interlayer film can be made wide to control each of the ten-point average roughness Rz(1), the ten-point average roughness Rz(2), and the ten-point average roughness Rz(3) within a suitable range. When the sectional shape in the thickness direction of an interlayer film is a wedge-like shape, it is preferred that the tilt angle between two embossing rolls be slightly larger or slightly smaller than the wedge angle of the interlayer film. In particular, it is preferred that the tilt angle between two embossing rolls be slightly smaller than the wedge angle of the interlayer film. Moreover, since the contact properties of an embossing roll are enhanced by adopting a relatively flexible material quality as the surface material quality of the embossing roll, it is easy to control each of the ten-point average roughness Rz(1), the ten-point average roughness Rz(2), and the ten-point average roughness Rz(3) within a suitable range.

Examples of the relatively flexible material quality include a kind of rubber, a resin, a flexible alloy, and the like.

Hereinafter, specific embodiments of the present invention and reference embodiments will be described with reference to the drawings.

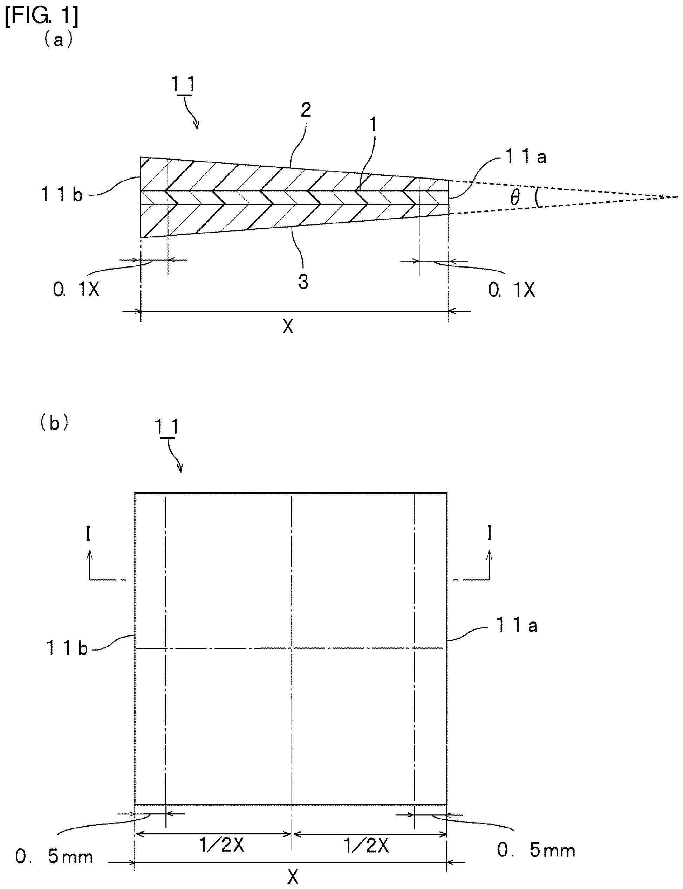

Figs. 1(a) and 1(b) show an interlayer film for laminated glass which is in accordance with a first embodiment of the present invention except for the fact that the positions which are indicated for the measurement of the ten-point average roughness Rz(1) and Rz(3) are not at a distance which is 50 mm apart from the ends, respectively. The interlayer film for laminated glass is schematically represented as a sectional view and a plan view. Fig. 1(a) is a sectional front view taken along the line I-I in Fig. 1(b). In this connection, in Fig. 1 and a figure described below, for convenience of illustration, the thicknesses of an interlayer film and respective layers constituting the interlayer film and the wedge angle θ are shown so as to be different from actual thicknesses thereof and an actual wedge angle.

In Fig. 1(a), a section in the thickness direction of an interlayer film 11 is shown. In this connection, in Fig. 1(a) and a figure described below, for convenience of illustration, the thicknesses of an interlayer film and respective layers constituting the interlayer film and the wedge angle θ are shown so as to be different from actual thicknesses thereof and an actual wedge angle.

The interlayer film 11 is provided with a first layer 1 (intermediate layer), a second layer 2 (surface layer), and a third layer 3 (surface layer). The second layer 2 is arranged on a first surface side of the first layer 1 to be layered thereon. The third layer 3 is arranged on a second surface side opposite to the first surface of the first layer 1 to be layered thereon. The first layer 1 is arranged between the second layer 2 and the third layer 3 to be sandwiched therebetween. The interlayer film 11 is used for obtaining laminated glass. The interlayer film 11 is an interlayer film for laminated glass. The interlayer film 11 is a multilayer interlayer film.

The interlayer film 11 has one end 11a and the other end 11b at the opposite side of the one end 11a. The one end 1a and the other end 11b are end parts of both sides facing each other. The sectional shape in the thickness direction of each of the second layer 2 and the third layer 3 is a wedge-like shape. The sectional shape in the thickness direction of the first layer 1 is a rectangular shape. The thickness of the one end 11a side of each of the second layer 2 and the third layer 3 is thinner than that of the other end 11b side thereof. Accordingly, the thickness of the one end 11a of the interlayer film 11 is thinner than the thickness of the other end 11b thereof. Accordingly, the interlayer film 11 has a region being thin in thickness and a region being thick in thickness.

The difference between the maximum thickness and the minimum thickness in the first layer 1 is smaller than the difference between the maximum thickness and the minimum thickness in the second layer 2. The difference between the maximum thickness and the minimum thickness in the first layer 1 is smaller than the difference between the maximum thickness and the minimum thickness in the third layer 3.

The interlayer film can be measured for the ten-point average roughness Rz(1), the ten-point average roughness Rz(2), and the ten-point average roughness Rz(3) at three intersection points formed by four alternate long and short dash lines shown in Fig. 1(b).

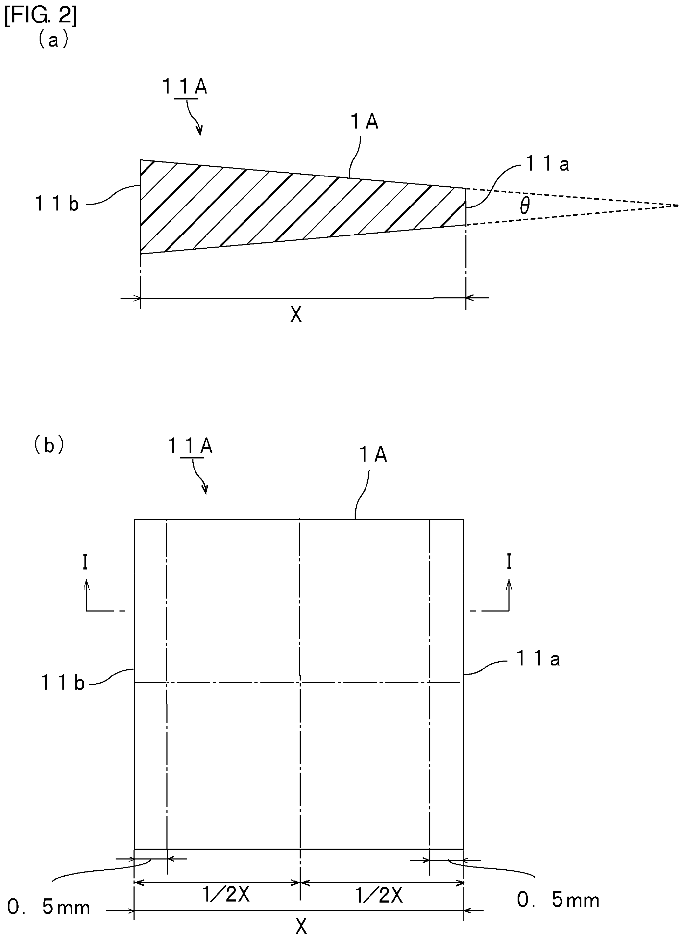

Figs. 2(a) and 2(b) show an interlayer film for laminated glass which is in accordance with a second embodiment of the present invention except for the fact that the positions which are indicated for the measurement of the ten-point average roughness Rz(1) and Rz(3) are not at a distance which is 50 mm apart from the ends, respectively. The interlayer film for laminated glass is schematically represented as a sectional view and a plan view. Fig. 2(a) is a sectional front view taken along the line I-I in Fig. 2(b). In Fig. 2(a), a section in the thickness direction of an interlayer film 11A is shown.

The interlayer film 11A shown in Fig. 2 is provided with a first layer 1A. The interlayer film 11A has a one-layer structure composed only of the first layer 1A and is a single-layered interlayer film. The interlayer film 11A is singly constituted by the first layer 1A. The interlayer film 11A is used for obtaining laminated glass. The interlayer film 11A is an interlayer film for laminated glass.

The sectional shape in the thickness direction of the first layer 1A corresponding to the interlayer film 11A is a wedge-like shape. The interlayer film 11A has one end 11a and the other end 11b at the opposite side of the one end 11a. The one end 11a and the other end 11b are end parts of both sides facing each other. The thickness of the one end 11a of the interlayer film 11A is thinner than the thickness of the other end 11b thereof. Accordingly, the first layer 1A corresponding to the interlayer film 11A has a region being thin in thickness and a region being thick in thickness.

The interlayer film can be measured for the ten-point average roughness Rz(1), the ten-point average roughness Rz(2), and the ten-point average roughness Rz(3) at three intersection points formed by four alternate long and short dash lines shown in Fig. 2(b).

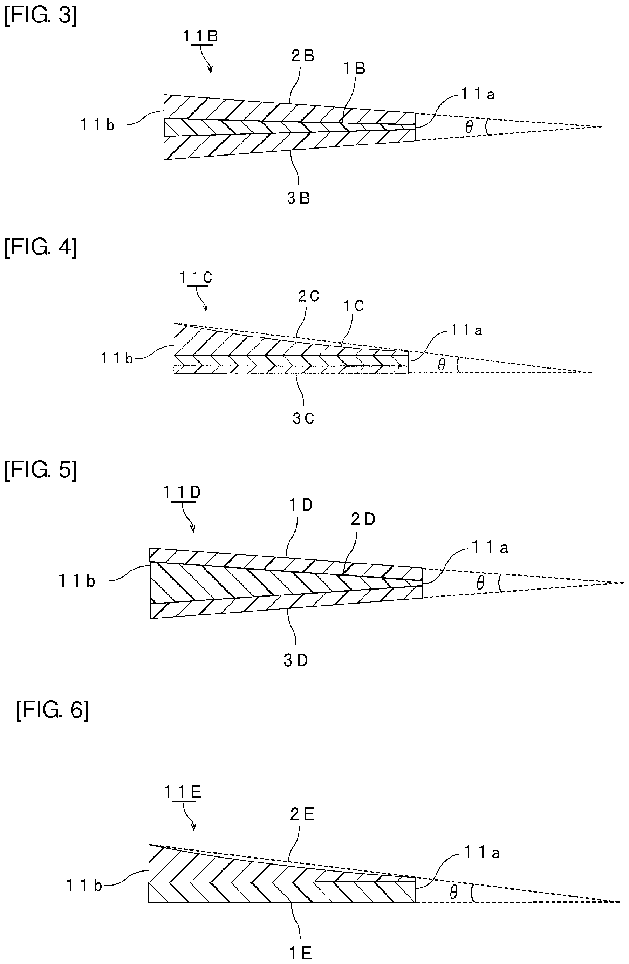

The interlayer film 11 shown in Fig. 1 has a structure in which the rectangular-shaped first layer 1 is sandwiched between the wedge-shaped second layer 2 and the wedge-shaped third layer 3. In Figs. 3 to 9, the first to seventh modified examples in which the interlayer film is changed in the shape of each layer or the whole shape are shown.

An interlayer film 11B in accordance with the first modified example shown in Fig. 3 is provided with a first layer 1B having a sectional shape in the thickness direction of a wedge-like shape, a second layer 2B having a sectional shape in the thickness direction of a wedge-like shape, and a third layer 3B having a sectional shape in the thickness direction of a wedge-like shape. The first layer 1B is arranged between the second layer 2B and the third layer 3B to be sandwiched therebetween.

The thickness of one end 11a side of each of the first layer 1B, the second layer 2B, and the third layer 3B is thinner than that of the other end 11b side thereof. Accordingly, the interlayer film 11B has a region being thin in thickness and a region being thick in thickness.

An interlayer film 11C in accordance with the second modified example shown in Fig. 4 is provided with a first layer 1C having a sectional shape in the thickness direction of a rectangular shape, a second layer 2C having a sectional shape in the thickness direction of a wedge-like shape, and a third layer 3C having a sectional shape in the thickness direction of a rectangular shape. The first layer 1C is arranged between the second layer 2C and the third layer 3C to be sandwiched therebetween. The thickness of one end 11a side of the second layer 2C is thinner than that of the other end 11b side thereof. Accordingly, the interlayer film 11C has a region being thin in thickness and a region being thick in thickness. The interlayer film 11C has a portion extending from the one end 11a to the other end 11b in which the amount of increase in the thickness is increased and has a portion extending from the one end 11a to the other end 11b in which the wedge angle θ' is increased. A single-layered interlayer film having the same shape as the interlayer film 11C may be adopted.

An interlayer film 11D in accordance with the third modified example shown in Fig. 5 is provided with a first layer 1D having a sectional shape in the thickness direction of a rectangular shape, a second layer 2D having a sectional shape in the thickness direction of a wedge-like shape, and a third layer 3D having a sectional shape in the thickness direction of a rectangular shape. The second layer 2D is arranged between the first layer 1D and the third layer 3D to be sandwiched therebetween. The thickness of one end 11a side of the second layer 2D is thinner than that of the other end 11b side thereof. Accordingly, the interlayer film 11D has a region being thin in thickness and a region being thick in thickness.

An interlayer film 11E in accordance with the fourth modified example shown in Fig. 6 is provided with a first layer 1E having a sectional shape in the thickness direction of a rectangular shape and a second layer 2E having a sectional shape in the thickness direction of a wedge-like shape. The second layer 2E is arranged on a first surface side of the first layer 1E to be layered thereon. The thickness of one end 11a side of the second layer 2E is thinner than that of the other end 11b side thereof. Accordingly, the interlayer film 11E has a region being thin in thickness and a region being thick in thickness. The interlayer film 11E has a portion extending from the one end 11a to the other end 11b in which the amount of increase in the thickness is increased and has a portion extending from the one end 11a to the other end 11b in which the wedge angle θ' is increased.

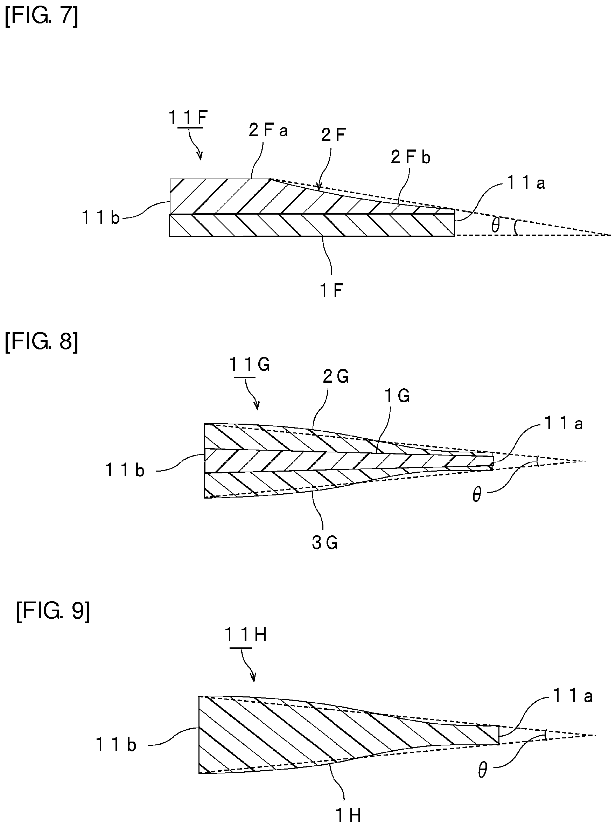

An interlayer film 11F in accordance with the fifth modified example shown in Fig. 7 is provided with a first layer 1F having a sectional shape in the thickness direction of a rectangular shape and a second layer 2F having a portion 2Fa with a sectional shape in the thickness direction of a rectangular shape and a portion 2Fb with a sectional shape in the thickness direction of a wedge-like shape. The second layer 2F is arranged on a first surface side of the first layer 1F to be layered thereon. The thickness of one end 11a side of the second layer 2F is thinner than that of the other end 11b side thereof. Accordingly, the interlayer film 11F has a region being thin in thickness and a region being thick in thickness. In the portion 2Fb where the sectional shape in the thickness direction is a wedge-like shape, the interlayer film 11F has a portion where the amount of increase in the thickness is increased in a direction from the one end 11a to the other end 11b and has a portion where the wedge angle θ' is increased in a direction from the one end 11a to the other end 11b. A single-layered interlayer film having the same shape as the interlayer film 11F may be adopted.

An interlayer film 11G in accordance with the sixth modified example shown in Fig. 8 is provided with a first layer 1G having a sectional shape in the thickness direction of a wedge-like shape, a second layer 2G having a sectional shape in the thickness direction of a wedge-like shape, and a third layer 3G having a sectional shape in the thickness direction of a wedge-like shape. The first layer 1G is arranged between the second layer 2G and the third layer 3G to be sandwiched therebetween.

The interlayer film 11G has a portion where the amount of increase in the thickness is increased in a direction from the one end 11a to the other end 11b, has a portion where the amount of increase in the thickness is decreased in a direction from the one end 11a to the other end 11b, has a portion where the wedge angle θ' is increased in a direction from the one end 11a to the other end 11b, and has a portion where the wedge angle θ' is decreased in a direction from the one end 11a to the other end 11b.

By adopting the second layer 2G and the third layer 3G, the interlayer film 11G is made to have a portion where the amount of increase in the thickness is increased in a direction from the one end 11a to the other end 11b, a portion where the wedge angle θ' is increased in a direction from the one end 11a to the other end 11b, and a portion where the wedge angle θ' is decreased in a direction from the one end 11a to the other end 11b.

An interlayer film 11H in accordance with the seventh modified example shown in Fig. 9 is provided with a first layer 1H having a sectional shape in the thickness direction of a wedge-like shape.

The interlayer film 11H has a portion where the amount of increase in the thickness is increased in a direction from the one end 11a to the other end 11b, has a portion where the amount of increase in the thickness is decreased in a direction from the one end 11a to the other end 11b, has a portion where the wedge angle θ' is increased in a direction from the one end 11a to the other end 11b, and has a portion where the wedge angle θ' is decreased in a direction from the one end 11a to the other end 11b.

In order to suppress double images, the wedge angle θ of the interlayer film can be appropriately set according to the fitting angle of laminated glass. From the viewpoint of further suppressing double images, the wedge angle θ of the interlayer film is preferably 0.01 mrad (0.0006 degrees) or more, more preferably 0.2 mrad (0.0115 degrees) or more, and preferably 2 mrad (0.1146 degrees) or less, and more preferably 0.7 mrad (0.0401 degrees) or less. The wedge angle θ of an interlayer film is an interior angle formed at the intersection point between a straight line connecting a point on the first surface of the maximum thickness part of the interlayer film and a point on the first surface of the minimum thickness part thereof and a straight line connecting a point on the second surface of the maximum thickness part of the interlayer film and a point on the second surface of the minimum thickness part thereof.

It is preferred that the interlayer film have a portion with a sectional shape in the thickness direction of a wedge-like shape. It is preferred that the interlayer film have a portion where the thickness is gradually increased from one end toward the other end. It is preferred that the sectional shape in the thickness direction of the interlayer film be a wedge-like shape. Examples of the sectional shape in the thickness direction of the interlayer film include a trapezoidal shape, a triangular shape, a pentagonal shape, and the like.

The interlayer film may have a colored band area in a partial region. The interlayer film may have a colored region in a partial region. When a multi-layered interlayer film has a colored band area or a colored region, it is preferred that a surface layer have a colored band area or a colored region. However, an intermediate layer may have a colored band area or a colored region. For example, at the time of extrusion-molding an interlayer film or at the time of extrusion-molding the respective layers of the interlayer film, a prescribed region can be blended with a coloring agent to form the colored band area or the colored region.

The thickness of the interlayer film is not particularly limited. The thickness of the interlayer film refers to the total thickness of the respective layers constituting the interlayer film. Thus, in the case of a multi-layered interlayer film 1, the thickness of the interlayer film refers to the total thickness of the first layer 1, the second layer 2, and the third layer 3.

The maximum thickness of the interlayer film is preferably 0.1 mm or more, more preferably 0.25 mm or more, further preferably 0.5 mm or more, especially preferably 0.8 mm or more, and preferably 3 mm or less, more preferably 2 mm or less, and further preferably 1.5 mm or less.

When the distance between one end and the other end is defined as X, it is preferred that the interlayer film have a minimum thickness in a region within a distance of 0X to 0.2X from the one end toward the inside and have a maximum thickness in a region within a distance of 0X to 0.2X from the other end toward the inside, and it is more preferred that the interlayer film have a minimum thickness in a region within a distance of 0X to 0.1X from the one end toward the inside and have a maximum thickness in a region within a distance of 0X to 0.1X from the other end toward the inside. It is preferred that one end of the interlayer film have a minimum thickness and the other end of the interlayer film have a maximum thickness. In the interlayer films 11, 11A, 11B, 11C, 11D, 11E, 11F, 11G, and 11H, the one end 11a has a minimum thickness and the other end 11b has a maximum thickness.

From the viewpoint of the practical aspect and the viewpoint of sufficiently heightening the adhesive force and the penetration resistance, the maximum thickness of a surface layer is preferably 0.001 mm or more, more preferably 0.2 mm or more, further preferably 0.3 mm or more, and preferably 1 mm or less, and more preferably 0.8 mm or less.

From the viewpoint of the practical aspect and the viewpoint of sufficiently enhancing the penetration resistance, the maximum thickness of a layer (intermediate layer) arranged between two surface layers is preferably 0.001 mm or more, more preferably 0.1 mm or more, further preferably 0.2 mm or more, and preferably 0.8 mm or less, more preferably 0.6 mm or less, and further preferably 0.3 mm or less.

The distance X between one end and the other end of the interlayer film is preferably 3 m or less, more preferably 2 m or less, especially preferably 1.5 m or less, and preferably 0.5 m or more, more preferably 0.8 m or more, and especially preferably 1 m or more.

Hereinafter, the details of materials constituting the respective layers of a multi-layered interlayer film and the single-layered interlayer film will be described.

### (Thermoplastic resin)

The thermoplastic resin is a polyvinyl acetal resin. By using a polyvinyl acetal resin and a plasticizer together, the adhesive force of the interlayer film for laminated glass according to the present invention to a lamination glass member or another interlayer film is further heightened.

For example, the polyvinyl acetal resin can be produced by acetalizing polyvinyl alcohol (PVA) with an aldehyde. It is preferred that the polyvinyl acetal resin be an acetalized product of polyvinyl alcohol. For example, the polyvinyl alcohol can be obtained by saponifying polyvinyl acetate. The saponification degree of the polyvinyl alcohol generally lies within the range of 70 to 99.9% by mole.

The average polymerization degree of the polyvinyl alcohol (PVA) is preferably 200 or more, more preferably 500 or more, even more preferably 1500 or more, further preferably 1600 or more, especially preferably 2600 or more, most preferably 2700 or more, and preferably 5000 or less, more preferably 4000 or less and further preferably 3500 or less. When the average polymerization degree is the above lower limit or more, the penetration resistance of laminated glass is further enhanced. When the average polymerization degree is the above upper limit or less, formation of an interlayer film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin fall within the range of 3 to 5 and it is more preferred that the number of carbon atoms of the acetal group be 3 or 4. When the number of carbon atoms of the acetal group in the polyvinyl acetal resin is 3 or more, the glass transition temperature of the interlayer film is sufficiently lowered.

The aldehyde is not particularly limited. In general, an aldehyde with 1 to 10 carbon atoms is suitably used. Examples of the aldehyde with 1 to 10 carbon atoms include propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, and the like. Propionaldehyde, n-butyraldehyde, isobutyraldehyde, n-hexylaldehyde, or n-valeraldehyde is preferred, propionaldehyde, n-butyraldehyde, or isobutyraldehyde is more preferred, and n-butyraldehyde is further preferred. One kind of the aldehyde may be used alone and two or more kinds thereof may be used in combination.

The content of the hydroxyl group (the amount of hydroxyl groups) of the polyvinyl acetal resin is preferably 15% by mole or more, more preferably 18% by mole or more, and preferably 40% by mole or less, and more preferably 35% by mole or less. When the content of the hydroxyl group is the above lower limit or more, the adhesive force of the interlayer film is further heightened. Moreover, when the content of the hydroxyl group is the above upper limit or less, the flexibility of the interlayer film is enhanced and the handling of the interlayer film is facilitated.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6728 "Testing methods for polyvinyl butyral".

The acetylation degree (the amount of acetyl groups) of the polyvinyl acetal resin is preferably 0.1% by mole or more, more preferably 0.3% by mole or more, further preferably 0.5% by mole or more, and preferably 30% by mole or less, more preferably 25% by mole or less, and further preferably 20% by mole or less. When the acetylation degree is the above lower limit or more, the compatibility between the polyvinyl acetal resin and a plasticizer is heightened. When the acetylation degree is the above upper limit or less, with regard to the interlayer film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be measured in accordance with JIS K6728 "Testing methods for polyvinyl butyral".

The acetalization degree of the polyvinyl acetal resin (the butyralization degree in the case of a polyvinyl butyral resin) is preferably 60% by mole or more, more preferably 63% by mole or more, and preferably 85% by mole or less, more preferably 75% by mole or less, and further preferably 70% by mole or less. When the acetalization degree is the above lower limit or more, the compatibility between the polyvinyl acetal resin and a plasticizer is heightened. When the acetalization degree is the above upper limit or less, the reaction time required for producing the polyvinyl acetal resin is shortened.

The acetalization degree is a mole fraction, represented in percentage, obtained by dividing a value obtained by subtracting the amount of ethylene groups to which the hydroxyl group is bonded and the amount of ethylene groups to which the acetyl group is bonded from the total amount of ethylene groups in the main chain by the total amount of ethylene groups in the main chain.

In this connection, it is preferred that the content of the hydroxyl group (the amount of hydroxyl groups), the acetalization degree (the butyralization degree) and the acetylation degree be calculated from the results measured by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

### (Plasticizer)

From the viewpoint of further heightening the adhesive force of an interlayer film, it is preferred that the interlayer film according to the present invention (the respective layers) contain a plasticizer. When the thermoplastic resin contained in an interlayer film is a polyvinyl acetal resin, it is especially preferred that the interlayer film (the respective layers) contain a plasticizer. It is preferred that a layer containing a polyvinyl acetal resin contain a plasticizer.

The plasticizer is not particularly limited. As the plasticizer, a conventionally known plasticizer can be used. One kind of the plasticizer may be used alone and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Organic ester plasticizers are preferred. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decanoic acid, and the like.

Examples of the polybasic organic acid ester include an ester compound of a polybasic organic acid and an alcohol having a linear or branched structure of 4 to 8 carbon atoms. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

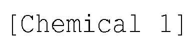

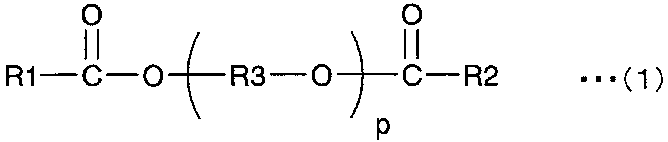

In the foregoing formula (1), R1 and R2 each represent an organic group with 5 to 10 carbon atoms, R3 represents an ethylene group, an isopropylene group, or an n-propylene group, and p represents an integer of 3 to 10. It is preferred that R1 and R2 in the foregoing formula (1) each be an organic group with 6 to 10 carbon atoms.

It is preferred that the plasticizer include triethylene glycol di-2-ethylhexanoate (3GO) or triethylene glycol di-2-ethylbutyrate (3GH) and it is more preferred that the plasticizer include triethylene glycol di-2-ethylhexanoate.

The content of the plasticizer is not particularly limited. In the respective layers, the content of the plasticizer is preferably 25 parts by weight or more, more preferably 30 parts by weight or more, and preferably 60 parts by weight or less, and more preferably 50 parts by weight or less relative to 100 parts by weight of the thermoplastic resin. When the content of the plasticizer is the above lower limit or more, the penetration resistance of laminated glass is further enhanced. When the content of the plasticizer is the above upper limit or less, the transparency of the interlayer film is further enhanced.

### (Heat shielding compound)

It is preferred that the interlayer film contain a heat shielding compound. It is preferred that the first layer contain a heat shielding compound. It is preferred that the second layer contain a heat shielding compound. It is preferred that the third layer contain a heat shielding compound. One kind of the heat shielding compound may be used alone and two or more kinds thereof may be used in combination.

It is preferred that the heat shielding compound be constituted of at least one kind of Ingredient X among a phthalocyanine compound, a naphthalocyanine compound, and an anthracyanine compound or be constituted of heat shielding particles. In this case, the heat shielding compound may be constituted of both of the Ingredient X and the heat shielding particles.

Ingredient X:
It is preferred that the interlayer film include at least one kind of Ingredient X among a phthalocyanine compound, a naphthalocyanine compound and an anthracyanine compound. It is preferred that the first layer contain the Ingredient X. It is preferred that the second layer contain the Ingredient X. It is preferred that the third layer contain the Ingredient X. The Ingredient X is a heat shielding compound. One kind of the Ingredient X may be used alone, and two or more kinds thereof may be used in combination.

The Ingredient X is not particularly limited. As the Ingredient X, conventionally known phthalocyanine compound, naphthalocyanine compound and anthracyanine compound can be used.

Examples of the Ingredient X include phthalocyanine, a derivative of phthalocyanine, naphthalocyanine, a derivative of naphthalocyanine, anthracyanine, and a derivative of anthracyanine, and the like. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

With regard to the interlayer film and laminated glass, from the viewpoint of further enhancing the heat shielding properties thereof, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding properties and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atoms or copper atoms and a derivative of phthalocyanine containing vanadium atoms or copper atoms. With regard to the interlayer film and laminated glass, from the viewpoint of still further enhancing the heat shielding properties thereof, it is preferred that the Ingredient X have a structural unit in which an oxygen atom is bonded to a vanadium atom.

In 100% by weight of a layer containing the Ingredient X (a first layer, a second layer or a third layer), the content of the Ingredient X is preferably 0.001% by weight or more, more preferably 0.005% by weight or more, further preferably 0.01% by weight or more, especially preferably 0.02% by weight or more, and preferably 0.2% by weight or less, more preferably 0.1% by weight or less, further preferably 0.05% by weight or less and especially preferably 0.04% by weight or less. When the content of the Ingredient X is the above lower limit or more and the above upper limit or less, the heat shielding properties are sufficiently enhanced and the visible light transmittance is sufficiently heightened. For example, it is possible to make the visible light transmittance 70% or more.

Heat shielding particles:
It is preferred that the interlayer film include heat shielding particles. It is preferred that the first layer contain the heat shielding particles. It is preferred that the second layer contain the heat shielding particles. It is preferred that the third layer contain the heat shielding particles. The heat shielding particle is of a heat shielding compound. By the use of heat shielding particles, infrared rays (heat rays) can be effectively cut off. One kind of the heat shielding particles may be used alone, and two or more kinds thereof may be used in combination.

From the viewpoint of further heightening the heat shielding properties of laminated glass, it is more preferred that the heat shielding particles be metal oxide particles. It is preferred that the heat shielding particle be a particle (a metal oxide particle) formed from an oxide of a metal.

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. As such, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride (LaB₆) particles, and the like. Heat shielding particles other than these may be used. Since the heat ray shielding function is high, preferred are metal oxide particles, more preferred are ATO particles, GZO particles, IZO particles, ITO particles or tungsten oxide particles, and especially preferred are ITO particles or tungsten oxide particles.
In particular, since the heat ray shielding function is high and the particles are readily available, preferred are tin-doped indium oxide particles (ITO particles), and also preferred are tungsten oxide particles.

With regard to the interlayer film and laminated glass, from the viewpoint of further enhancing the heat shielding properties thereof, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

With regard to the interlayer film and laminated glass, from the viewpoint of further enhancing the heat shielding properties thereof, cesium-doped tungsten oxide particles are especially preferred. With regard to the interlayer film and laminated glass, from the viewpoint of still further enhancing the heat shielding properties thereof, it is preferred that the cesium-doped tungsten oxide particles be tungsten oxide particles represented by the formula: Cs_{0.33}WO₃.

The average particle diameter of the heat shielding particles is preferably 0.01 µm or more, more preferably 0.02 µm or more, and preferably 0.1 µm or less and more preferably 0.05 µm or less. When the average particle diameter is the above lower limit or more, the heat ray shielding properties are sufficiently heightened. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of a layer containing the heat shielding particles (a first layer, a second layer, or a third layer), each content of the respective kinds of heat shielding particles (in particular, the content of tungsten oxide particles) is preferably 0.01% by weight or more, more preferably 0.1% by weight or more, further preferably 1% by weight or more, especially preferably 1.5% by weight or more, and preferably 6% by weight or less, more preferably 5.5% by weight or less, further preferably 4% by weight or less, especially preferably 3.5% by weight or less, and most preferably 3.0% by weight or less. When the content of the heat shielding particles is the above lower limit or more and the above upper limit or less, the heat shielding properties are sufficiently enhanced and the visible light transmittance is sufficiently heightened.

### (Metal salt)

It is preferred that the interlayer film contain at least one kind of metal salt (hereinafter, sometimes described as Metal salt M) among an alkali metal salt, an alkaline earth metal salt, and a magnesium salt. It is preferred that the first layer contain the Metal salt M. It is preferred that the second layer contain the Metal salt M. It is preferred that the third layer contain the Metal salt M. By the use of the Metal salt M, controlling the adhesivity between the interlayer film and a lamination glass member such as a glass plate or the adhesivity between respective layers in the interlayer film is facilitated. One kind of the Metal salt M may be used alone and two or more kinds thereof may be used in combination.

It is preferred that the Metal salt M contain at least one kind of metal selected from the group consisting of Li, Na, K, Rb, Cs, Mg, Ca, Sr, and Ba. It is preferred that the metal salt contained in the interlayer film contain at least one kind of metal between K and Mg.

Moreover, it is more preferred that the Metal salt M be an alkali metal salt of an organic acid with 2 to 16 carbon atoms, an alkaline earth metal salt of an organic acid with 2 to 16 carbon atoms, and a magnesium salt of an organic acid with 2 to 16 carbon atoms, and it is further preferred that the Metal salt M be a magnesium carboxylate with 2 to 16 carbon atoms or a potassium carboxylate with 2 to 16 carbon atoms.

Although the magnesium carboxylate with 2 to 16 carbon atoms and the potassium carboxylate with 2 to 16 carbon atoms are not particularly limited, examples thereof include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in a layer containing the Metal salt M (a first layer, a second layer, or a third layer) is preferably 5 ppm or more, more preferably 10 ppm or more, further preferably 20 ppm or more, and preferably 300 ppm or less, more preferably 250 ppm or less, and further preferably 200 ppm or less. When the total of the contents of Mg and K is the above lower limit or more and the above upper limit or less, the adhesivity between the interlayer film and a glass plate or the adhesivity between respective layers in the interlayer film can be further well controlled.

### (Ultraviolet ray screening agent)

It is preferred that the interlayer film include an ultraviolet ray screening agent. It is preferred that the first layer contain an ultraviolet ray screening agent. It is preferred that the second layer contain an ultraviolet ray screening agent. It is preferred that the third layer contain an ultraviolet ray screening agent. By the use of an ultraviolet ray screening agent, even when the interlayer film and the laminated glass are used for a long period of time, the visible light transmittance becomes further difficult to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure or an ultraviolet ray screening agent having a benzoate structure, more preferably an ultraviolet ray screening agent having a benzotriazole structure or an ultraviolet ray screening agent having a benzophenone structure, and further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface thereof may be coated with any material. Examples of the coating material for the surface of the ultraviolet ray screening agent containing a metal oxide include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), and 2-(2'-hydroxy-3',5'-di-amylphenyl)benzotriazole ("Tinuvin 328" available from BASF Japan Ltd.). It is preferred that the ultraviolet ray screening agent be an ultraviolet ray screening agent having a benzotriazole structure containing a halogen atom and it is more preferred that the ultraviolet ray screening agent be an ultraviolet ray screening agent having a benzotriazole structure containing a chlorine atom, because those are excellent in ultraviolet ray absorbing performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

From the viewpoint of further suppressing the lowering in visible light transmittance after the lapse of a certain period of time, in 100% by weight of a layer containing the ultraviolet ray screening agent (a first layer, a second layer, or a third layer), the content of the ultraviolet ray screening agent, for example, the content of the benzotriazole compound, is preferably 0.1% by weight or more, more preferably 0.2% by weight or more, further preferably 0.3% by weight or more, especially preferably 0.5% by weight or more, and preferably 2.5% by weight or less, more preferably 2% by weight or less, further preferably 1% by weight or less, and especially preferably 0.8% by weight or less. In particular, by setting the content of the ultraviolet ray screening agent to be 0.2% by weight or more in 100% by weight of a layer containing the ultraviolet ray screening agent, with regard to the interlayer film and laminated glass, the lowering in visible light transmittance thereof after the lapse of a certain period of time can be significantly suppressed.

### (Oxidation inhibitor)

It is preferred that the interlayer film include an oxidation inhibitor. It is preferred that the first layer contain an oxidation inhibitor. It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene), and the like. One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, tris(2,4-di-t-butylphenyl) phosphite, 2,2'-methylenebis(4,6-di-t-butyl-1-phenyloxy)(2-ethylhexyloxy)phosphorus, and the like. One kind or two or more kinds among these oxidation inhibitors are suitably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "IRGANOX 1010" available from BASF Japan Ltd., and the like.

With regard to the interlayer film and laminated glass, in order to maintain high visible light transmittance thereof over a long period of time, it is preferred that the content of the oxidation inhibitor be 0.1% by weight or more in 100% by weight of the interlayer film or in 100% by weight of the layer containing the oxidation inhibitor (a first layer, a second layer or a third layer). Moreover, since an effect commensurate with the addition of an oxidation inhibitor is not attained, it is preferred that the content of the oxidation inhibitor be 2% by weight or less in 100% by weight of the interlayer film or in 100% by weight of the layer containing the oxidation inhibitor.

### (Other ingredients)

Each of the first layer, the second layer, and the third layer may contain additives such as a coupling agent, a dispersing agent, a surfactant, a flame retardant, an antistatic agent, a pigment, a dye, an adhesive force regulating agent other than a metal salt, a moisture-resistance improving agent, a fluorescent brightening agent, and an infrared ray absorber, as necessary. One kind of these additives may be used alone and two or more kinds thereof may be used in combination.

### (Laminated glass)

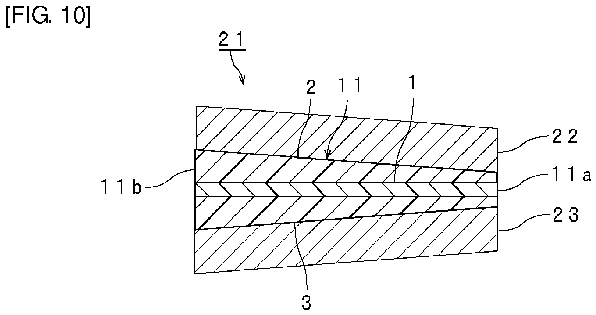

Fig. 10 shows an example of laminated glass prepared with an interlayer film for laminated glass in accordance with one embodiment of the present invention represented as a sectional view.

The laminated glass 21 shown in Fig. 10 is provided with an interlayer film 11, a first lamination glass member 22, and a second lamination glass member 23. The interlayer film 11 is arranged between the first lamination glass member 22 and the second lamination glass member 23 to be sandwiched therebetween. The first lamination glass member 22 is arranged on a first surface of the interlayer film 11. The second lamination glass member 23 is arranged on a second surface opposite to the first surface of the interlayer film 11.

Examples of the lamination glass member include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate provided with a glass plate and it is preferred that at least one glass plate be used. It is preferred that each of the first lamination glass member and the second lamination glass member be a glass plate or a PET (polyethylene terephthalate) film and the interlayer film include at least one glass plate as the first lamination glass member or the second lamination glass member. It is especially preferred that both of the first lamination glass member and the second lamination glass member be glass plates.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, green glass, and the like. The organic glass is synthetic resin glass substituted for inorganic glass. Examples of the sheet of organic glass include a polycarbonate plate, a poly(meth)acrylic resin plate, and the like. Examples of the poly(meth)acrylic resin plate include a polymethyl (meth)acrylate plate, and the like.

Although respective thicknesses of the first lamination glass member and the second lamination glass member are not particularly limited, the thickness is preferably 1 mm or more and preferably 5 mm or less. When the lamination glass member is a glass plate, the thickness of the glass plate is preferably 1 mm or more and preferably 5 mm or less. When the lamination glass member is a PET film, the thickness of the PET film is preferably 0.03 mm or more and preferably 0.5 mm or less.

The method for producing the laminated glass is not particularly limited. For example, the interlayer film is sandwiched between the first lamination glass member and the second lamination glass member, and then, passed through pressure rolls or subjected to decompression suction in a rubber bag. Therefore, the air remaining between the first lamination glass member and the interlayer film and between the second lamination glass member and the interlayer film is removed. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, laminated glass can be obtained.

The laminated glass can be used for automobiles, railway vehicles, aircraft, ships, buildings, and the like. It is preferred that the laminated glass be laminated glass for building or for vehicles and it is more preferred that the laminated glass be laminated glass for vehicles. The laminated glass can also be used for applications other than these applications. The laminated glass can be used for a windshield, side glass, rear glass, or roof glass of an automobile, and the like. Since the laminated glass is high in heat shielding properties and is high in visible light transmittance, the laminated glass is suitably used for automobiles.

Since laminated glass prepared with the interlayer film enables double images to be suppressed, the laminated glass can be suitably used for a windshield of an automobile. It is preferred that the interlayer film be used for laminated glass constituting a head-up display (HUD). It is preferred that the laminated glass constitute a head-up display (HUD).

In the laminated glass, measured information such as the speed which is sent from a control unit and the like can be emitted from a display unit of the instrumental panel to be projected onto the windshield. As such, without making a driver of an automobile move his or her visual field downward, a front visual field and measured information can be visually recognized simultaneously.

Hereinafter, the present invention will be described in more detail with reference to examples.

The following materials were used in examples and comparative examples.

Thermoplastic resin:
Polyvinyl acetal resins were appropriately used. In all polyvinyl acetal resins used, n-butyraldehyde which has 4 carbon atoms is used for the acetalization.

With regard to the polyvinyl acetal resin, the acetalization degree (the butyralization degree), the acetylation degree, and the content of the hydroxyl group were measured by a method in accordance with JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

Plasticizer:
3GO (triethylene glycol di-2-ethylhexanoate)

Ultraviolet ray screening agent:
Tinuvin 326 (2-(2'-hydroxy-3'-t-butyl-5-methylphenyl)-5-chlorobenzotriazole, "Tinuvin 326" available from BASF Japan Ltd.)

Oxidation inhibitor:
BHT (2,6-di-t-butyl-p-cresol)

Adhesive force regulating agent:
A mixture of magnesium acetate and magnesium 2-ethylbutyrate (in a weight ratio of 1 : 1)

### (Example 1)

Preparation of resin composition for forming interlayer film:
To 100 parts by weight of a polyvinyl acetal resin (a PVB resin, the average polymerization degree of 1700, the amount of hydroxyl groups of 30.6% by mole, the acetalization degree of 68.5% by mole, the amount of acetyl groups of 0.9% by mole), 40 parts by weight of a plasticizer (3GO), 0.2 parts by weight of an ultraviolet ray screening agent (Tinuvin 326), 0.2 parts by weight of an oxidation inhibitor (BHT), and an adhesive force regulating agent (a mixture of magnesium acetate and magnesium 2-ethylbutyrate (in a weight ratio of 1 : 1)) in an amount that the content of Mg in the resulting interlayer film becomes 50 ppm were added and thoroughly kneaded with a mixing roll to obtain a resin composition for forming an interlayer film.

Preparation of interlayer film:
The resin composition obtained was extruded using an extruder to prepare an interlayer film before subjected to emboss processing which has a sectional shape in the thickness direction of a wedge-like shape.

One among two embossing rolls was tilted to make an interval between the two embossing rolls at one end side of an interlayer film narrow and to make an interval between the two embossing rolls at the other end side thereof wide, and by an embossing roll method, the surface of the obtained interlayer film before subjected to emboss processing was embossed to prepare an interlayer film (first layer). On this occasion, embossing rolls in which the material quality of the roll surface is a metal were used. In this connection, the interlayer film obtained was wound into a roll.

The interlayer film obtained was determined to have a thickness of one end in the TD direction thinner than the thickness of the other end at the opposite side of the one end and a uniform thickness in the MD direction, and the maximum thickness and minimum thickness of the interlayer film and the wedge angle θ of the interlayer film were determined to be those shown in the following Table 1. The outline of a section in the thickness direction of the interlayer film obtained was determined to have a shape shown in Fig. 2. The sectional shape in the thickness direction of the interlayer film obtained was determined to be a wedge-like shape and the interlayer film was determined to have a shape in which the thickness is gradually thickened from one end toward the other end. The interlayer film was determined to have a minimum thickness at one end and have a maximum thickness at the other end. In this connection, the tilt angle between two embossing rolls was made slightly smaller than the wedge angle of the interlayer film.

Preparation of laminated glass:
The interlayer film obtained was cut into a size of 800 mm in the TD direction × 600 mm in the MD direction. Next, the interlayer film was sandwiched between two sheets of clear glass (800 mm in longitudinal length × 600 mm in transversal length × 2.5 mm in thickness) to obtain a laminate. The laminate was put into a rubber bag and the inside thereof was degassed for 20 minutes at a degree of vacuum of 2.6 kPa, after which the laminate was transferred into an oven while keeping the laminate degassed, and furthermore, held in place at 90°C for 30 minutes and pressed under vacuum to subject the laminate to preliminary press-bonding. The preliminarily press-bonded laminate was subjected to press-bonding for 20 minutes under conditions of 135°C and a pressure of 1.2 MPa in an autoclave to obtain a sheet of laminated glass.

### (Example 3)

In Example 3, as in the case of Example 1, one among two embossing rolls was tilted to make an interval between the two embossing rolls at one end side of an interlayer film narrow and to make an interval between the two embossing rolls at the other end side thereof wide when the surface of the obtained interlayer film before subjected to emboss processing was embossed. An interlayer film was obtained in the same manner as that in Example 1 except that the pressing force of the embossing roll was changed. A sheet of laminated glass was obtained in the same manner as that in Example 1 except that the interlayer film obtained was used.

### (Example 4 - Reference Example)

Preparation of interlayer film:
A resin composition similar to that in Example 1 was extruded using an extruder, in which the die temperature was changed, to obtain an interlayer film before subjected to emboss processing which has a sectional shape in the thickness direction of a wedge-like shape.

One among two embossing rolls was tilted to make an interval between the two embossing rolls at one end side of an interlayer film narrow and to make an interval between the two embossing rolls at the other end side thereof wide, and by an embossing roll method, the surface of the obtained interlayer film before subjected to emboss processing was embossed to prepare an interlayer film (first layer). Moreover, an embossing roll in which the material quality of the roll surface is a metal was tilted to be used, and as a mating embossing roll to the tilted embossing roll, an embossing roll in which the material quality of the roll surface is a kind of rubber having a JIS hardness of 45 to 80 was used. In this connection, the interlayer film obtained was wound into a roll.

In the interlayer film obtained, the thickness of one end in the TD direction was made thinner than the thickness of the other end at the opposite side of the one end, the thickness in the MD direction was made uniform, and the maximum thickness and minimum thickness of the interlayer film and the wedge angle θ of the interlayer film were set to those listed in the following Table 1. The outline of a section in the thickness direction of the interlayer film obtained was determined to have a shape shown in Fig. 9. The sectional shape in the thickness direction of the interlayer film obtained was determined to be a wedge-like shape and the interlayer film was determined to have a portion (recess-shaped portion) extending from one end to a position of 0.25X, when the width of the interlayer film in the TD direction is defined as X, where the wedge angle is increased in a direction from the one end to the other end and have a portion (protrusion-shaped portion) extending from one end to a position of 0.5X where the wedge angle is decreased in a direction from the one end to the other end. The interlayer film was determined to have a minimum thickness at one end and have a maximum thickness at the other end.

Preparation of laminated glass:
A sheet of laminated glass was obtained in the same manner as that in Example 1 except that the interlayer film obtained was used.

### (Comparative Example 1)

In Comparative Example 1, as in the case of Example 1, one among two embossing rolls was tilted to make an interval between the two embossing rolls at one end side of an interlayer film narrow and to make an interval between the two embossing rolls at the other end side thereof wide when the surface of the obtained interlayer film before subjected to emboss processing was embossed. An interlayer film was obtained in the same manner as that in Example 1 except that the tilt angle of the tilted embossing roll was made larger than that in Example 1. A sheet of laminated glass was obtained in the same manner as that in Example 1 except that the interlayer film obtained was used.

### (Comparative Example 2)

In Comparative Example 2, as in the case of Example 1, one among two embossing rolls was tilted to make an interval between the two embossing rolls at one end side of an interlayer film narrow and to make an interval between the two embossing rolls at the other end side thereof wide when the surface of the obtained interlayer film before subjected to emboss processing was embossed. An interlayer film was obtained in the same manner as that in Example 1 except that the tilt angle of the tilted embossing roll was made smaller than that in Example 1. A sheet of laminated glass was obtained in the same manner as that in Example 1 except that the interlayer film obtained was used.

### (Comparative Example 3)

In Comparative Example 3, as in the case of Example 1, one among two embossing rolls was tilted to make an interval between the two embossing rolls at one end side of an interlayer film narrow and to make an interval between the two embossing rolls at the other end side thereof wide when the surface of the obtained interlayer film before subjected to emboss processing was embossed. An interlayer film was obtained in the same manner as that in Example 1 except that the tilt angle of the tilted embossing roll was made larger than that in Example 1 and the pressing force of the embossing roll was changed. A sheet of laminated glass was obtained in the same manner as that in Example 1 except that the interlayer film obtained was used.

### (Comparative Example 4)

In Comparative Example 3, as in the case of Example 1, one among two embossing rolls was tilted to make an interval between the two embossing rolls at one end side of an interlayer film narrow and to make an interval between the two embossing rolls at the other end side thereof wide when the surface of the obtained interlayer film before subjected to emboss processing was embossed. An interlayer film was obtained in the same manner as that in Example 1 except that the tilt angle of the tilted embossing roll was made smaller than that in Example 1 and the pressing force of the embossing roll was changed. A sheet of laminated glass was obtained in the same manner as that in Example 1 except that the interlayer film obtained was used.

### (Example 2 - Reference Example)

Preparation of resin composition for forming first layer:
With 100 parts by weight of a polyvinyl acetal resin (a PVB resin, the average polymerization degree of 3000, the amount of hydroxyl groups of 22% by mole, the acetalization degree of 65% by mole, the amount of acetyl groups of 13% by mole), 60 parts by weight of a plasticizer (3GO), 0.2 parts by weight of an ultraviolet ray screening agent (Tinuvin 326), and 0.2 parts by weight of an oxidation inhibitor (BHT) were mixed to obtain a resin composition for forming a first layer.

Preparation of resin composition for forming second layer and third layer:
With 100 parts by weight of a polyvinyl acetal resin (a PVB resin, the average polymerization degree of 1700, the amount of hydroxyl groups of 30.6% by mole, the acetalization degree of 68.5% by mole, the amount of acetyl groups of 0.9% by mole), 40 parts by weight of a plasticizer (3GO), 0.2 parts by weight of an ultraviolet ray screening agent (Tinuvin 326), 0.2 parts by weight of an oxidation inhibitor (BHT), and an adhesive force regulating agent (a mixture of magnesium acetate and magnesium 2-ethylbutyrate (in a weight ratio of 1 : 1)) in an amount that the content of Mg in the resulting interlayer film becomes 50 ppm were mixed to obtain a resin composition for forming a second layer and a third layer.

Preparation of interlayer film:
The resin composition for forming a first layer and the resin composition for forming a second layer and a third layer were coextruded using a coextruder to obtain an interlayer film before subjected to emboss processing which has a layered structure with a stack of a second layer (525 µm in average thickness)/a first layer (200 µm in average thickness)/a third layer (675 µm in average thickness) and has a sectional shape in the thickness direction of a wedge-like shape.

One among two embossing rolls was tilted to make an interval between the two embossing rolls at one end side of an interlayer film narrow and to make an interval between the two embossing rolls at the other end side thereof wide, and by an embossing roll method, the surface of the obtained interlayer film before subjected to emboss processing was embossed to prepare an interlayer film (second layer/first layer/third layer). In this connection, the interlayer film obtained was wound into a roll. On this occasion, embossing rolls in which the material quality of the roll surface is a metal were used.

The interlayer film obtained was determined to have a thickness of one end in the TD direction thinner than the thickness of the other end at the opposite side of the one end and a uniform thickness in the MD direction, and the maximum thickness and minimum thickness of the interlayer film and the wedge angle θ of the interlayer film were determined to be those shown in the following Table 1. The outline of a section in the thickness direction of the interlayer film obtained was determined to have a shape shown in Fig. 1. The sectional shape in the thickness direction of the interlayer film obtained was determined to be a wedge-like shape and the interlayer film was determined to have a shape in which the thickness is gradually thickened from one end toward the other end. The interlayer film was determined to have a minimum thickness at one end and have a maximum thickness at the other end. In this connection, the tilt angle between two embossing rolls was made slightly larger than the wedge angle of the interlayer film.

The second layer was determined to have a thickness of one end in the TD direction thinner than the thickness of the other end at the opposite side of the one end, a uniform thickness in the MD direction, a thickness of the one end of 300 µm, a thickness of the other end of 1050 µm, a sectional shape in the thickness direction of a wedge-like shape, and a shape in which the thickness is gradually thickened from the one end toward the other end. The first layer was determined to have a thickness of one end in the TD direction equal to the thickness of the other end at the opposite side of the one end, a uniform thickness in the MD direction, a thickness of 200 µm, and a sectional shape in the thickness direction of a rectangular shape. The third layer was determined to have a thickness of one end in the TD direction thinner than the thickness of the other end at the opposite side of the one end, a uniform thickness in the MD direction, a thickness of the one end of 300 µm, a thickness of the other end of 750 µm, a sectional shape in the thickness direction of a wedge-like shape, and a shape in which the thickness is gradually thickened from the one end toward the other end.

Preparation of laminated glass:
The interlayer film obtained was cut into a size of 1579 mm in the TD direction × 600 mm in the MD direction. Next, the interlayer film was sandwiched between two sheets of clear glass (1579 mm in longitudinal length × 600 mm in transversal length × 2.5 mm in thickness) to obtain a laminate. The laminate was put into a rubber bag and the inside thereof was degassed for 20 minutes at a degree of vacuum of 2.6 kPa, after which the laminate was transferred into an oven while being degassed, and furthermore, held in place for 30 minutes at 90°C and pressed under vacuum to subject the laminate to preliminary press-bonding. The preliminarily press-bonded laminate was subjected to press-bonding for 20 minutes under conditions of 135°C and a pressure of 1.2 MPa in an autoclave to obtain a sheet of laminated glass.

### (Example 5 - Reference Example)

In Example 5, as in the case of Example 2, one among two embossing rolls was tilted to make an interval between the two embossing rolls at one end side of an interlayer film narrow and to make an interval between the two embossing rolls at the other end side thereof wide when the surface of the obtained interlayer film before subjected to emboss processing was embossed. An interlayer film was obtained in the same manner as that in Example 2 except that the pressing force of the embossing roll was changed. A sheet of laminated glass was obtained in the same manner as that in Example 2 except that the interlayer film obtained was used.

### (Example 6)

Preparation of interlayer film:
A resin composition similar to that in Example 2 was extruded using an extruder, in which the die temperature was changed, to obtain an interlayer film before subjected to emboss processing which has a layered structure with a stack of a second layer (525 µm in average thickness)/a first layer (200 µm in average thickness)/a third layer (675 µm in average thickness) and has a sectional shape in the thickness direction of a wedge-like shape.

One among two embossing rolls was tilted to make an interval between the two embossing rolls at one end side of an interlayer film narrow and to make an interval between the two embossing rolls at the other end side thereof wide, and by an embossing roll method, the surface of the obtained interlayer film before subjected to emboss processing was embossed to prepare an interlayer film ((second layer/first layer/third layer). On this occasion, the angle between two embossing rolls was made slightly smaller than the wedge angle. Moreover, an embossing roll in which the material quality of the roll surface is a metal was tilted to be used, and as a mating embossing roll to the tilted embossing roll, an embossing roll in which the material quality of the roll surface is a kind of rubber having a JIS hardness of 45 to 80 was used. In this connection, the interlayer film obtained was wound into a roll.

In the interlayer film obtained, the thickness of one end in the TD direction was made thinner than the thickness of the other end at the opposite side of the one end, the thickness in the MD direction was made uniform, and the maximum thickness and minimum thickness of the interlayer film and the wedge angle θ of the interlayer film were set to those listed in the following Table 1. The outline of a section in the thickness direction of the interlayer film obtained was determined to have a shape shown in Fig. 8. The sectional shape in the thickness direction of the interlayer film obtained was determined to be a wedge-like shape and the interlayer film was determined to have a portion (recess-shaped portion) extending from one end to a position of 0.25X, when the width of the interlayer film in the TD direction is defined as X, where the wedge angle is increased in a direction from the one end to the other end and have a portion (protrusion-shaped portion) extending from the one end to a position of 0.5X where the wedge angle is decreased in a direction from the one end to the other end. The interlayer film was determined to have a minimum thickness at one end and have a maximum thickness at the other end.

The second layer was determined to have a thickness of one end in the TD direction thinner than the thickness of the other end at the opposite side of the one end, a uniform thickness in the MD direction, a thickness of the one end of 300 µm, a thickness of the other end of 1050 µm, a sectional shape in the thickness direction of a wedge-like shape, and a shape in which the thickness is gradually thickened from the one end toward the other end. The first layer was determined to have a thickness of one end in the TD direction equal to the thickness of the other end at the opposite side of the one end, a uniform thickness in the MD direction, a thickness of 200 µm, and a sectional shape in the thickness direction of a rectangular shape. The third layer was determined to have a thickness of one end in the TD direction thinner than the thickness of the other end at the opposite side of the one end, a uniform thickness in the MD direction, a thickness of the one end of 300 µm, a thickness of the other end of 750 µm, a sectional shape in the thickness direction of a wedge-like shape, and a shape in which the thickness is gradually thickened from the one end toward the other end. The second and third layers were determined to have a portion where the amount of increase in the thickness is decreased in a direction from the one end to the other end and have a portion (protrusion-shaped portion) where the wedge angle θ' is decreased in a direction from the one end to the other end. The second and third layers were determined to have a portion (recess-shaped portion) being at a position apart by 0.25X from one end, when the width of the interlayer film in the TD direction is defined as X, where the wedge angle is increased in a direction from the one end to the other end and have a portion (protrusion-shaped portion) being at a position apart by 0.5X from the one end where the wedge angle is decreased in a direction from the one end to the other end.

Preparation of laminated glass:
A sheet of laminated glass was obtained in the same manner as that in Example 2 except that the interlayer film obtained was used.

### (Example 7 - Reference Example)

Preparation of interlayer film:
A resin composition similar to that in Example 2 was extruded using an extruder, in which the kind of the die was changed, to obtain an interlayer film before subjected to emboss processing which has a layered structure with a stack of a second layer (575 µm in average thickness)/a first layer (250 µm in average thickness)/a third layer (575 µm in average thickness) and has a sectional shape in the thickness direction of a wedge-like shape.

One among two embossing rolls was tilted to make an interval between the two embossing rolls at one end side of an interlayer film narrow and to make an interval between the two embossing rolls at the other end side thereof wide, and by an embossing roll method, the surface of the obtained interlayer film before subjected to emboss processing was embossed to prepare an interlayer film (second layer/first layer/third layer). In this connection, the interlayer film obtained was wound into a roll. On this occasion, the angle between two embossing rolls was made slightly smaller than the wedge angle. Moreover, on this occasion, embossing rolls in which the material quality of the roll surface is a metal were used. In this connection, the interlayer film obtained was wound into a roll.

The second and third layers were determined to have a thickness of one end in the TD direction thinner than the thickness of the other end at the opposite side of the one end, a uniform thickness in the MD direction, a thickness of the one end of 300 µm, a thickness of the other end of 850 µm, a sectional shape in the thickness direction of a wedge-like shape, and a shape in which the thickness is gradually thickened from the one end toward the other end. The first layer was determined to have a thickness of one end in the TD direction thinner than the thickness of the other end at the opposite side of the one end, a uniform thickness in the MD direction, a thickness of the one end of 200 µm, a thickness of the other end of 300 µm, a sectional shape in the thickness direction of a wedge-like shape, and a shape in which the thickness is gradually thickened from the one end toward the other end.

Preparation of laminated glass:
A sheet of laminated glass was obtained in the same manner as that in Example 2 except that the interlayer film obtained was used.

### (Comparative Example 5)

In Comparative Example 5, as in the case of Example 2, one among two embossing rolls was tilted to make an interval between the two embossing rolls at one end side of an interlayer film narrow and to make an interval between the two embossing rolls at the other end side thereof wide when the surface of the obtained interlayer film before subjected to emboss processing was embossed. An interlayer film was obtained in the same manner as that in Example 2 except that the tilt angle of the tilted embossing roll was made larger than that in Example 2. A sheet of laminated glass was obtained in the same manner as that in Example 2 except that the interlayer film obtained was used.

### (Evaluation)

### (1) Ten-point average roughness Rz

By a method in accordance with JIS B 0601 (1994), the interlayer film obtained was measured in the TD direction for three values of the ten-point average roughness Rz(1) of the surface at a position apart from one end by 50 mm toward the other end, the ten-point average roughness Rz(2) of the surface at a center position between the one end and the other end, and the ten-point average roughness Rz(3) of the surface at a position apart from the other end by 50 mm toward the one end. Measurement conditions were set to conditions of Cut-off value = 2.5 mm, Sampling length = 2.5 mm, Evaluation length = 12.5 mm, Radius at the tip of the probe = 2 µm, Angle at the tip thereof = 60°, and Measurement speed = 0.5 mm/s and the measurement was performed under the environment of 23°C and 30 RH%. In this connection, the evaluation was performed on one surface side of the interlayer film.

### (2) Occurrence or non-occurrence of blocking of interlayer film

With regard to the roll-shaped interlayer film obtained, on the basis of the tensile force at the time of winding off at room temperature, the interlayer film was evaluated for the occurrence or non-occurrence of blocking according to the following criteria.

### [Criteria for judgment in occurrence or non-occurrence of blocking]

○: The tensile force at the time of winding off is less than 200 N.
Δ: The tensile force at the time of winding off is 200 N or more and less than 250 N.
×: The tensile force at the time of winding off is 250 N or more (blocking occurred).

### (3) Existence or non-existence of air bubble left behind in laminated glass

The sheet of laminated glass obtained was evaluated whether or not an air bubble was left behind. The existence or non-existence of an air bubble left behind was judged according to the following criteria.

### [Criteria for judgment in existence or non-existence of air bubble left behind]

○: No air bubble is left behind.
Δ: An air bubble is left behind but the largest diameter of the air bubble is less than 50 µm.
×: An air bubble is left behind and the largest diameter of the air bubble is 50 µm or more.

### (4) Double images

A sheet of laminated glass was installed at a position of the windshield. The information to be displayed, which is emitted from a display unit installed below the sheet of laminated glass, was reflected in the sheet of laminated glass to visually confirm the presence or absence of double images at a prescribed position. The double images were judged according to the following criteria.

### [Criteria for judgment in double images]

○: Double images are not confirmed.
×: Double images are confirmed.

The results are shown in the following Table 1.

**[Table 1]**

| | Constitution of interlayer film | | | | Evaluation | | | | | | | |
|---|---|---|---|---|---|---|---|---|---|---|---|---|
| | Wedge angle | Maximum thickness | Minimum thickness | Sectional shape in thickness direction | (1) Ten-point average roughness Rz | | | | | (2) Occurrence or non-occurrence of blocking | (3) Existence or non-existence of air bubble left behind | (4) Double images |
| | | | | | (1) Thin portion | (2) Center | (3) Thick portion | Average value of (1), (2), and (3) | Largest value among (1), (2), and (3) - smallest value among those | | | |
| | ° | µm | µm | | µm | µm | µm | µm | µm | | | |
| Example 1 | 0.2 | 960 | 800 | Fig. 2 | 32 | 29 | 33 | 31.3 | 4 | ○ 163N | ○ | o |
| Example 3 | 0.2 | 960 | 800 | Fig. 2 | 20 | 21 | 24 | 21.7 | 4 | ○ 175N | ○ | o |
| Example 4 | 0.2 | 960 | 800 | Fig. 9 | 29 | 25 | 23 | 25.7 | 6 | 180N | ○ | ○ |
| Comparative Example 1 | 0.2 | 960 | 800 | Fig. 2 | 28 | 25 | 18 | 23.7 | 10 | ○ 160N | × | ○ |
| Comparative Example 2 | 0.2 | 960 | 800 | Fig. 2 | 25 | 28 | 35 | 29.3 | 10 | ○ 160N | × | ○ |
| Comparative Example 3 | 0.2 | 960 | 800 | Fig. 2 | 20 | 21 | 20 | 20.3 | 1 | × 255N | × | ○ |
| Comparative Example 4 | 0.2 | 960 | 800 | Fig. 2 | 16 | 20 | 24 | 20.0 | 8 | Δ 210N | × | ○ |
| Example 2 | 0.76 | 2000 | 800 | Fig. 1 | 31 | 26 | 27 | 28.0 | 5 | ○ 171N | ○ | ○ |
| Example 5 | 0.76 | 2000 | 800 | Fig. 1 | 28 | 25 | 24 | 25.7 | 4 | o 195N | ○ | ○ |
| Example 6 | 0.76 | 2000 | 800 | Fig. 8 | 23 | 22 | 28 | 24.3 | 6 | ○ 165N | ○ | ○ |
| Example 7 | 0.76 | 2000 | 800 | Fig. 3 | 23 | 28 | 25 | 25.3 | 5 | ○ 184N | ○ | ○ |
| Comparative Example 5 | 0.76 | 2000 | 800 | Fig. 1 | 41 | 33 | 20 | 31.3 | 21 | × 263N | × | ○ |

### EXPLANATION OF SYMBOLS

1, 1A, 1B, 1C, 1D, 1E, 1F, 1G, 1H: First layer
2, 2B, 2C, 2D, 2E, 2F, 2G: Second layer
2Fa: Portion having sectional shape in thickness direction of rectangular shape
2Fb: Portion having sectional shape in thickness direction of wedge-like shape
3, 3B, 3C, 3D, 3G: Third layer
11, 11A, 11B, 11C, 11D, 11E, 11F, 11G, 11H: Interlayer film
11a: One end
11b: The other end
21: Laminated glass
22: Lamination glass member
23: Lamination glass member

## Claims

1. An interlayer film for laminated glass, containing a thermoplastic resin and having one end and the other end being at the opposite side of the one end and having a thickness thicker than the one end,
the thermoplastic resin being a polyvinyl acetal resin,
each of three values of the ten-point average roughness Rz, as measured according to the method in the description, of the surface at a position apart from the one end by 50 mm toward the other end, the ten-point average roughness Rz, as measured according to the method in the description, of the surface at a center position between the one end and the other end, and the ten-point average roughness Rz, as measured according to the method in the description, of the surface at a position apart from the other end by 50 mm toward the one end being 20 µm or more and 50 µm or less, a value calculated by subtracting the smallest value among the three values from the largest value among the three values being 3 µm or more and 9 µm or less and the largest value among the three values being the ten-point average roughness Rz of the surface at a position apart from the other end by 50 mm toward the one end.

2. The interlayer film for laminated glass according to claim 1, wherein the thickness at a position apart from the other end by 50 mm toward the one end is 1.2 times or more and 2.5 times or less of the thickness at a position apart from the one end by 50 mm toward the other end.

3. The interlayer film for laminated glass according to claim 1 or 2, further containing a plasticizer.

4. The interlayer film for laminated glass according to any one of claims 1 to 3, wherein the surface thereof is embossed.

5. A laminated glass, comprising:
a first lamination glass member;
a second lamination glass member; and
the interlayer film for laminated glass according to any one of claims 1 to 4,
the interlayer film for laminated glass being arranged between the first lamination glass member and the second lamination glass member.

## Patentansprüche

1. Zwischenschichtfilm für Verbundsicherheitsglas, der ein thermoplastisches Harz enthält und der ein Ende und das andere Ende aufweist, das auf der gegenüberliegenden Seite des einen Endes liegt und eine Dicke aufweist, die dicker als das eine Ende ist, wobei das thermoplastische Harz ein Polyvinylacetalharz ist, wobei jeder von drei Werten der Zehnpunkthöhe (*ten-point average roughness* - Rz), gemessen gemäß dem Verfahren in der Beschreibung, der Oberfläche an einer Position, die von dem einen Ende um 50 mm zu dem anderen Ende hin entfernt liegt, der Zehnpunkthöhe (Rz), gemessen gemäß dem Verfahren in der Beschreibung, der Oberfläche an einer Mittelposition zwischen dem einen Ende und dem anderen Ende, und der Zehnpunkthöhe (Rz), gemessen gemäß dem Verfahren in der Beschreibung, der Oberfläche an einer Position, die von dem anderen Ende um 50 mm zu dem einen Ende hin entfernt liegt, wenigstens 20 µm und höchstens 50 µm beträgt, wobei ein Wert, der durch Subtrahieren des kleinsten Wertes unter den drei Werten von dem größten Wert unter den drei Werten berechnet wird, wenigstens 3 µm und höchstens 9 µm beträgt und wobei der größte Wert unter den drei Werten die Zehnpunkthöhe (Rz) der Oberfläche an einer Position ist, die von dem anderen Ende um 50 mm zu dem einen Ende hin entfernt liegt.

2. Zwischenschichtfilm für Verbundsicherheitsglas nach Anspruch 1, wobei die Dicke an einer Position, die von dem anderen Ende um 50 mm zu dem einen Ende hin entfernt liegt, wenigstens das 1,2-fache und höchstens das 2,5-fache der Dicke an einer Position ist, die von dem einen Ende um 50 mm zu dem anderen Ende hin entfernt liegt.

3. Zwischenschichtfilm für Verbundsicherheitsglas nach Anspruch 1 oder 2, ferner enthaltend einen Weichmacher.

4. Zwischenschichtfilm für Verbundsicherheitsglas nach einem der Ansprüche 1 bis 3, wobei die Oberfläche davon geprägt ist.

5. Verbundsicherheitsglas, umfassend:
ein erstes Verbundsicherheitsglaselement;
ein zweites Verbundsicherheitsglaselement; und
den Zwischenschichtfilm für Verbundsicherheitsglas nach einem der Ansprüche 1 bis 4, wobei der Zwischenschichtfilm für Verbundsicherheitsglas zwischen dem ersten Verbundsicherheitsglaselement und dem zweiten Verbundsicherheitsglaselement angeordnet ist.

## Revendications

1. Film intermédiaire pour verre feuilleté, contenant une résine thermoplastique et ayant une première extrémité et l'autre extrémité se trouvant sur le côté opposé de la première extrémité et ayant une épaisseur plus épaisse que la première extrémité, la résine thermoplastique étant une résine de poly(acétal de vinyle), chacune de trois valeurs de la rugosité Rz moyenne à dix points, telle que mesurée selon le procédé de la description, de la surface à une position éloignée d'une extrémité de 50 mm vers l'autre extrémité, la rugosité Rz moyenne à dix points, telle que mesurée selon le procédé de la description, de la surface à une position centrale entre la première extrémité et l'autre extrémité, et la rugosité Rz moyenne à dix points, telle que mesurée selon le procédé de la description, de la surface à une position différente de l'autre extrémité de 50 mm vers la première extrémité étant supérieure ou égale à 20 µm et inférieure ou égale à 50 µm, une valeur calculée en soustrayant la plus petite valeur parmi les trois valeurs de la plus grande valeur parmi les trois valeurs étant supérieure ou égale à 3 µm et inférieure ou égale à 9 µm et la plus grande valeur parmi les trois valeurs étant la rugosité Rz moyenne à dix points de la surface à une position éloignée de l'autre extrémité de 50 mm vers la première extrémité.

2. Film intermédiaire pour verre feuilleté selon la revendication 1, dans lequel l'épaisseur à une position éloignée de l'autre extrémité de 50 mm vers la première extrémité est 1,2 fois ou plus et 2,5 fois ou moins l'épaisseur à une position éloignée de la première extrémité de 50 mm vers l'autre extrémité.

3. Film intermédiaire pour verre feuilleté selon la revendication 1 ou 2, contenant en outre un plastifiant.

4. Film intermédiaire pour verre feuilleté selon l'une quelconque des revendications 1 à 3, dans lequel la surface de celui-ci est bosselé.

5. Verre feuilleté comprenant :
un premier élément de verre feuilleté ;
un second élément de verre feuilleté ; et
le film intermédiaire pour verre feuilleté selon l'une quelconque des revendications 1 à 4, le film intermédiaire pour verre feuilleté étant agencé entre le premier élément en verre feuilleté et le second élément en verre feuilleté.
